# EUROPÄISCHE PATENTSCHRIFT

(11) **EP 2 319 287 B1**
(45) Veröffentlichungstag und Bekanntmachung des Hinweises auf die Patenterteilung: **08.02.2012**
(21) Anmeldenummer: 10188742.0
(22) Anmeldetag: 25.10.2010
(51) Int. Cl.: A01D 34/33

(54) **Verbindungsanordnung zum Verbinden eines Mähmesserantriebs mit einem Mähmesser**
Connecting assembly for connecting a mower blade drive with a mower blade
Agencement de liaison destiné à relier un entraînement de lame de faucheuse et une lame de faucheuse

(30) Priorität: 08.11.2009 DE 102009053185; 05.07.2010 DE 102010017738
(43) Veröffentlichungstag der Anmeldung: 11.05.2011
(73) Patentinhaber: Eichelhardter Werkzeug- und Maschinenbau GmbH, 57612 Eichelhardt (DE)
(72) Erfinder: Schumacher, Heinrich Günter, 57612, Eichelhardt (DE)
(74) Vertreter: Müller, Thomas Michael

(56) Entgegenhaltungen:
- EP-A1- 1 460 289
- DE-A1- 2 533 018
- DE-A1- 2 946 478
- DE-A1-102006 010 825
- DE-C- 340 042
- US-A- 5 380 114
- US-A1- 2002 088 916

## Beschreibung

Die Erfindung betrifft eine Verbindungsanordnung zum Verbinden eines Mähmesserantriebs mit einem Mähmesser umfassend ein Verbindungselement, das mit dem Mähmesser ein Bauteil bildet oder zur Verbindung mit demselben dient und das einen offenen Ring mit einer entlang einer Längsachse verlaufenden Durchgangsbohrung aufweist, ein Zwischenelement, das in der Durchgangsbohrung des Verbindungselements sitzt und eine sphärische Innenfläche aufweist, und ein Rotationslager, das mit einer der sphärischen Innenfläche angepassten sphärischen Außenfläche in dem Zwischenelement aufgenommen ist., wobei die sphärische Innenfläche und die sphärische Außenfläche derart gestaltet sind, dass das Rotationslager in dem Zwischenelement gehalten ist.

Eine solche Verbindungsanordnung ist aus der DE 10 2006 010 825 B4 bekannt. Dort ist eine Verbindungsanordnung gezeigt, welche ein Verbindungselement am Mähmesser, das zumindest teilweise als offener Ring mit einer entlang einer Längsachse verlaufenden Durchgangsbohrung gestaltet ist, aufweist. Ferner ist einen Zwischenring vorgesehen, der in der Durchgangsbohrung des Verbindungselements sitzt, eine sphärische Innenfläche aufweist und auf seinem Umfang mindestens einen Schlitz aufweist. In dem Zwischenelement ist ein Wälzlager, mit einer der sphärischen Innenfläche angepassten sphärischen Außenfläche aufgenommen. Von Nachteil ist, dass besonders abgedichtete Wälzlager zum Einsatz kommen müssen, um eine dauerhafte Schmierung der Wälzlager zu gewährleisten, und diese vor Verschmutzung zu schützen.

Die DE 40 35 528 C2 beschreibt eine Verbindungsanordnung zwischen einem Mähmesserantrieb und einem linear hin- und hergehend bewegten Mähmesser bei Doppelmesserschneidwerken von Frontmähern. Die Einleitung der Hubbewegung erfolgt über einen schwenkend bewegten Antriebshebel und einen daran angeschlossenen Mitnehmerzapfen, wobei der Antriebshebel über eine Gelenklagerung mit dem Mähmesser verbunden ist. Die Gelenkanordnung ist erforderlich, da der Mitnehmerzapfen durch seine Anbindung an den Antriebshebel dessen Schwenkbewegung folgend auf einer Kreisbahn bewegt wird. Da das Mähmesser nur linear hin- und hergehend bewegbar geführt ist, muss die Anordnung im Betrieb ständig sowohl eine Schwenk-bewegung des Mitnehmerzapfens zu dem mit dem Mähmesser verbundenen Verbindungselement als auch eine axiale Verstellung des Mitnehmerzapfens zulassen. Das zur Verbindung mit dem Mähmesser dienende Verbindungselement weist einen ringartig gestalteten Abschnitt und darin eine kreiszylindrische Bohrung auf. In dieser Bohrung ist ein in Umfangsrichtung geschlossener Zwischenring mit seiner an die Bohrung angepassten kreiszylindrischen Außenfläche aufgenommen und festgesetzt. Der Zwischenring besitzt eine sphärische Innenfläche. An dieser sphärische Innenfläche ist ein in Umfangsrichtung geschlossener Lagerring mit einer sphärischen Außenfläche schwenkbeweglich aufgenommen. Der Lagerring weist eine kreiszylindrische Durchgangsbohrung auf. In dieser Durchgangsbohrung sitzt der Mitnehmerzapfen entlang der Achse der Durchgangsbohrung verschiebbar, um die aus der Bewegung des Mitnehmerzapfens mit dem Antriebshebel auf einer Kreisbahn resultierende Lageveränderung zur Verstellachse des Mähmessers ausgleichen zu können. Die gesamte Verbindungsanordnung ist, bezogen auf eine Längsachse des Mitnehmerzapfens, in Richtung zum Mähmesser geneigt. Um einen Schmierraum für die sphärischen Flächen zu gewährleisten, ist in der kreiszylindrischen Bohrung des Verbindungselements in Richtung zum Mähmesser ein Deckel eingesetzt, der die Bohrung nach unten hin abdichtet. Auf der gegenüberliegenden Seite der Bohrung ist ein Faltenbalg vorgesehen, der die Bohrung gegenüber dem Mitnehmerzapfen abdichtet.

Aus den Druckschriften DE 340 042 C, DE 25 33 018 A1 und DE 29 46 478 A1 sind Anordnungen gekannt, bei denen Wälzlager einen Außenring mit einer sphärischen Außenfläche aufweisen. Mit dieser sphärischen Außenfläche sind die Wälzlager in einem Bauteil mit sphärischer Innenfläche angeordnet, so dass die Wälzlager winklig zu ihrer Drehachse eingestellt werden können. Die Dokumente DE 25 33 018 A1 und DE 29 46 478 A1 offenbaren Bauteile mit sphärischer Innenfläche, die zweiteilig gestaltet sind, um eine Montage des Wälzlagers zu ermöglichen. Bei der DE 340 042 C wird die Montierbarkeit des Wälzlagers dadurch erzielt, dass die sphärische Innenfläche zu einer axialen Seite hin hinterschnittsfrei gestaltet ist, so dass das Wälzlagers axial eingeschoben werden kann. Bei dieser Lösung sind jedoch separate Federelemente erforderlich, die das Wälzlager in Richtung zur eingeschobenen Position mit Kraft beaufschlagen.

Der Erfindung liegt die Aufgabe zugrunde, eine Verbindungsanordnung zwischen einem Mähmesserantrieb und einem Mähmesser zu schaffen, welche eine sichere Aufrechterhaltung der Einbaustellung und für den Ausbau und den erneuten Einbau ein leichtes Lösen und Anpassen an die gegebenenfalls geänderten Einbauverhältnisse erlaubt, und darüber hinaus eine lange Lebensdauer bei einfachem Aufbau ermöglicht.

Die Aufgabe wird erfindungsgemäß durch eine Verbindungsanordnung gemäß Anspruch 1 gelöst. Bevorzugte Ausführungsbeispiele ergeben sich aus den Unteransprüchen.

Durch das topfförmige Zwischenelement ist eine einfache Lösung für die Abdichtung des Rotationstagers gegeben. Es müssen keine separaten Dichtungen an dieser Stelle vorgesehen werden. Insbesondere, da bei Mähmesserantrieben das Zwischenelement derart angeordnet ist, dass sich dieses nach oben hin öffnet, dient es als Auffangelement für nach unten fließendes Schmiermittel.

Von Vorteil bei dieser Ausbildung ist ferner, dass die Verbindungsanordnung sehr kompakt aufgebaut ist, weil das Rotationslager unmittelbar über die sphärischen Flächen im Zwischenelement schwenkbar gehalten ist. Günstig ist auch, dass die auf die Verbindungsanordnung ausgeübten Kräfte immer mittig auf das Rotationslager einwirken. Durch eine Herstellung des Zwischenelements aus Metall kann eine günstige Wärmeleitung vom Rotationslager weg nach außen erzielt werden. Dies wird durch den unmittelbaren Kontakt der einzelnen, bevorzugt aus Metall gefertigten, Bauteile noch gefördert. Das Zwischenelement kann aber auch, um ein einfaches Aufpressen oder Aufschlagen des Zwischenelements auf das Rotationslagers zu gewährleisten, aus einem Kunststoff hergestellt sein. Um eine erhöhte Wärmeleitfähigkeit des Kunststoffs zu erzielen, kann dieser mit Metallpartikeln versetzt sein.

Eine günstige Kraftaufnahme ergibt sich insbesondere dann, wenn das Rotationswälzlager als Doppelkegelrollenlager gestaltet ist.

Das topfförmige Zwischenelement weist eine um die Längsachse verlaufende Wand und einen Boden auf. Um die Montage des Zwischenelements zu erleichtern, kann dieses an der vom Boden abgewandten Seite die Wand eine Öffnung mit einer umlaufenden inneren Montagefläche aufweisen, die sich in Richtung zu einer vom Boden abgewandten Kante der Wand konusförmig erweitert

Es kann zumindest ein erster Schlitz in dem Wandabschnitt vorgesehen sein, der von einer dem Boden abgewandten Kante des Wandabschnitts ausgeht. Vorzugsweise sind mehrere, insbesondere drei erste Schlitze vorgesehen. Somit lässt sich das Zwischenelement leicht auf dem Rotationslager montieren. Hierzu wird das Zwischenelement auf das Rotationslager axial aufgeschoben, wobei sich die Wandbereiche zwischen den ersten Schlitzen radial elastisch nach außen biegen.

Ferner kann zur Erhöhung der radialen Elastizität der Wand auf dessen Umfang zumindest ein zweiter Schlitz vorgesehen sein, der axial versetzt zum zumindest einen ersten Schlitz angeordnet ist und nicht von der Kante aus verläuft.

Um Leckage zu vermeiden, endet, von der Kante aus gesehen, der zumindest eine zweite Schlitze innerhalb der Durchgangsbohrung. Zur Abdichtung kann auch alternativ oder zusätzlich vorgesehen sein, dass die ersten und/oder zweiten Schlitze mit einem Gummimaterial verfüllt sein, das an das Zwischenelemente anvulkanisiert ist, so dass die Schlitze die nötige Elastizität bieten und gleichzeitig nach außen abgedichtet sind.

Das Rotationslager ist derart ausgestaltet, dass es eine Aufnahmebohrung zur Aufnahme eines Mitnehmerzapfens des Mähmesserantriebs aufweist. Vorzugsweise ist das Rotationslager als Wälzlager mit einem Lageraußenring, der die sphärische Auβenfläche aufweist, einem Lagerinnenring, der die Aufnahmebohrung aufweist, und zwischen dem Lageraußenring und dem Lagerinnenring angeordneten Wälzkörpern gestaltet. Das Rotationslager kann jedoch auch als Gleitlager ausgebildet sein, wobei ein einziger Lagerring vorgesehen sein kann, der die sphärische Außenfläche und die Aufnahmebohrung bildet. Andererseits kann das Rotationslager in Form eines Gleitlagers auch zwei drehbar zueinander angeordnete Lagerringe aufweisen.

Zum Sichern des Zwischenelements auf dem Rotationslager sind Spannmittel zur Veränderung des Querschnitts der Durchgangsbohrung des Verbindungselements vorgesehen.

Die Ausbildung des Verbindungselementes als offener Ring wird vorzugsweise dadurch erreicht, dass das Verbindungselement entlang der Längsachse eine erste Stirnfläche und eine zweite Stirnfläche aufweist und durch einen Spalt unterbrochen ist, der zwischen der ersten Stirnfläche und der zweiten Stirnfläche verläuft. Dabei läuft dieser Spalt zweckmäßigerweise parallel zur Längsachse.

Um eine Verspannung zu erzielen, durch die der Querschnitt der Durchgangsbohrung verringert wird, ist vorgesehen, dass beidseitig des Spalts vorstehend Ansätze dem Verbindungselement angeformt sind, die durchbohrt sind und denen mindestens eine Spannschraube zugeordnet ist.

Zur Montage des Zwischenelements auf dem Rotationslager einer vorangehend beschriebenen Verbindungsanordnung, wobei das topfförmige Zwischenelement der Verbindungsanordnung im montierten Zustand einen Schmiermittelraum begrenzt und wobei die Verbindungsanordnung einen Kopflagerhalter umfasst, der einen Mitnehmerzapfen sowie einen Schmierkanal, der im montierten Zustand der Verbindungsanordnung von einem Schmierkanaleingang zum Schmiermittelraum verläuft, aufweist, kann vorgesehen sein, dass das Rotationslager auf den Mitnehmerzapfen aufgeschoben wird, anschließend das Zwischenelement auf die sphärische Außenfläche des Rotationslagers bei geöffnetem Schmiermittelkanal als Entlüftung aufgepresst, und abschließend das Zwischenelement innerhalb der Durchgangsbohrung des Verbindungselements verspannt wird.

Hierbei kann vorgesehen werden, dass nach dem Aufpressen oder Aufschlagen des Zwischenelements auf das Rotationslager der Schmiermittelkanaleingang mit einem Schmiernippel versehen oder mit einem Verschlusselement verschlossen wird.

Somit ist gewährleistet, dass beim Aufpressen Zwischenelements auf das Rotationslager Luft aus dem Schmiermittelraum durch den Schmiermittelkanal entweichen kann. Erst danach wird der Schmiermittelkanal verschlossen. Wenn ein Schmiernippel zum Abschmieren des Rotationslagers vorgesehen wird, kann beim Abschmieren Schmiermittel oder Luft durch eine Dichtung am Rotationslager austreten.

Bevorzugte Ausführungsbeispiele der Erfindung sind in der Zeichnung schematisch dargestellt. Hierin zeigt
- Figur 1: eine Draufsicht auf eine Verbindungsanordnung gemäß der Erfindung mit der Anbindung zu dem Mähmesser,
- Figur 2: eine Ansicht in Pfeilrichtung X von Figur 1,
- Figur 3: einen Schnitt entlang einer Längsachse durch die Verbindungsanordnung,
- Figur 4: eine Ansicht vergleichbar zu Figur 2, wobei jedoch das Verbindungsele- ment entfernt ist,
- Figur 5: eine Frontansicht der Verbindungsanordnung gemäß Figur 4,
- Figur 6: einen Schnitt entlang der Schnittlinie A-A gemäß Figur 5 und
- Figur 7: eine Ansicht gemäß Figur 4 mit einer alternativen Ausführungsform eines Zwischenelements mit Schlitzen.

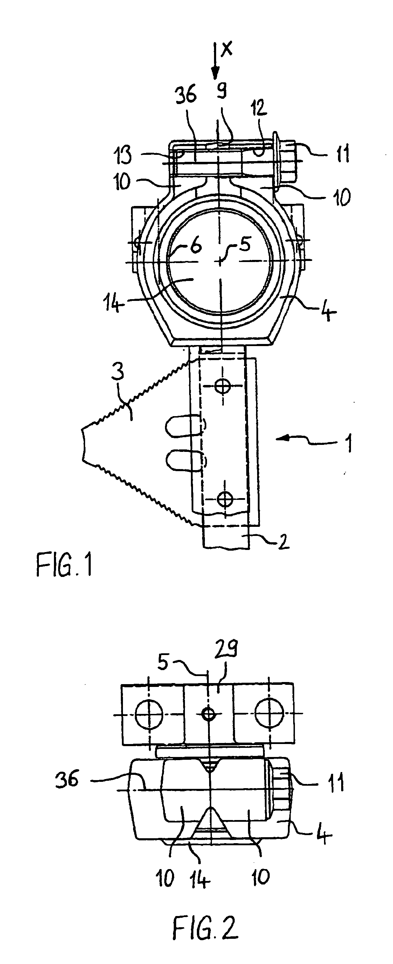

Aus der Ansicht gemäß Figur 1 ist ein Abschnitt eines Mähmessers 1 mit dem Messerrücken 2 und einer daran angebrachten Messerklinge 3 ersichtlich, wobei in der Blattebene in Verlängerung des Messerrückens 2 eine Vielzahl von solchen Messerklingen 3 an dem Messerrücken 2 angebracht sind. Am Ende des Messerrückens 2 ist ein, vorzugsweise metallisches, Verbindungselement 4 in Form eines Messerkopfauges angebracht, das eine erste Stirnfläche 7 und eine zweite Stirnfläche 8 und eine durch dasselbe hindurch verlaufende und sich zwischen den beiden Stirnflächen 7, 8 erstreckende Durchgangsbohrung 6 aufweist, die auf einer Längsachse 5 zentriert ist.

Wie insbesondere aus Figur 2 erkenntlich ist, ist das Verbindungselement 4 als offener Ring gestaltet. Es verläuft ein Spalt 9 zwischen den beiden Stirnflächen 7, 8. Der Spalt 9 verläuft parallel zur Längsachse 5. Er könnte auch unter einem Winkel zu derselben angeordnet sein.

Beidseitig des Spalts 9 befinden sich zwei von der Längsachse 5 weg vorstehende Ansätze 10. Einer dieser beiden Ansätze 10 ist mit einer durchgehenden Bohrung 12 versehen, die auf einer Achse 36 angeordnet ist, welche die Längsachse 5 mit Abstand kreuzt. Auf der Achse 36 dieser Bohrung 12 ist in dem zweiten Ansatz 10 eine Gewindebohrung 13 angeordnet. Eine Spannschraube 11, insbesondere Kopfschraube, tritt durch die Bohrung 12 hindurch und wird in die Gewindebohrung 13 eingeschraubt, so dass sie eine Verringerung des Querschnittes der Durchgangsbohrung 6 bewirkt, je nachdem, wie stark sie angezogen wird. Grundsätzlich kann hier auch beidseitig eine Durchgangsbohrung vorgesehen sein, durch die die Spannschraube hindurch geführt ist, wobei diese dann mit einer Mutter zu sichern ist.

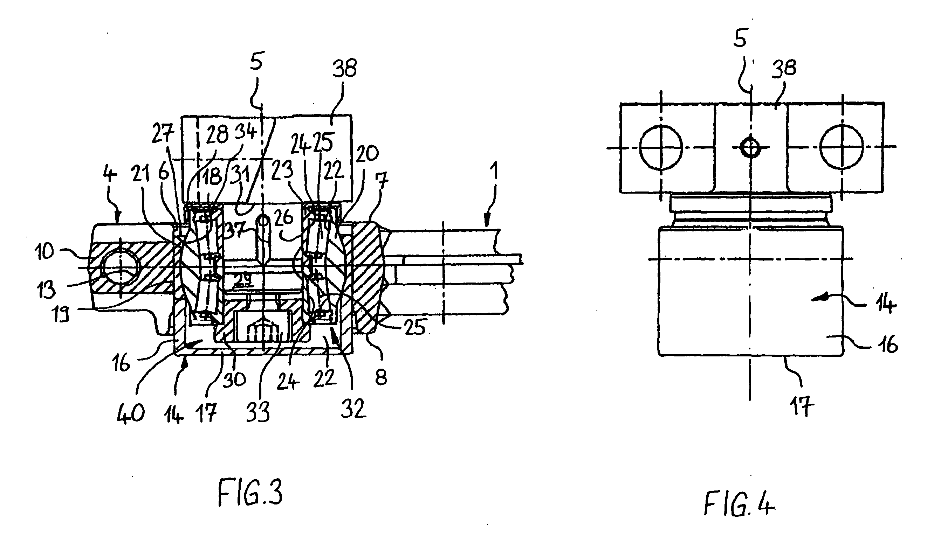

In der kreiszylindrischen Durchgangsbohrung 6 sitzt ein, vorzugsweise metallisches, Zwischenelement 14, wie insbesondere aus den Figuren 3 bis 6 ersichtlich wird. Dieses Zwischenelement 14 weist eine um die Längsachse 5 umlaufende Wand 16 und einen das Zwischenelement 14 einseitig abschließenden Boden 17 auf.

Das Zwischenelement 14 ist vorzugsweise aus einem Stahl hergestellt, und kann dabei mit Kunststoff ummantelt, z.B. umspritzt sein. Grundsätzlich können auch andere Werkstoffe eingesetzt werden, so lange sie die nötige Elastizität der zwischen den ersten Schlitzen 15 vorhandenen Wandbereiche gewährleisten. So kann zum Beispiel auch ein Kunststoffmaterial in Frage kommen. Zur Erhöhung der Wärmeleitfähigkeit können hierbei Metallpartikel in den Kunststoff eingebettet sein.

Die Wand 16 weist eine sphärische Innenfläche 18 und eine kreiszylindrische Außenfläche 19 auf. Sie ist mit der kreiszylindrischen Außenfläche 19 in der kreiszylindrischen Durchgangsbohrung 6 des Verbindungselementes 4 aufgenommen und darin entlang der Längsachse 5 verstellbar.

Ein Rotationslager, das als Wälzlager 32 ausgestaltet ist, umfasst einen Lageraußenring 20, der in Umfangsrichtung geschlossen ist und eine sphärische Außenfläche 21 aufweist. Die sphärische Außenfläche 21 ist an die sphärische Innenfläche 18 des Zwischenelements 14 angepasst. Der Lageraußenring 20 ist durch diese Anordnung schwenkbar in dem Zwischenelement 14 gehalten. Die Montage des Zwischenelements 14 auf den Lageraußenring 20 erfolgt durch elastisches Aufweiten der Wand 16 des Zwischenelements 14. Dadurch lässt sich das Zwischenelement 14 leicht und sicher auf dem Wälzlager 32 montieren.

Der Lageraußenring 20 weist zwei kegelige Außenlaufbahnen 22 auf, deren Durchmesser aufeinander zu abnimmt. Es ist ferner ein zweigeteilter Lagerinnenring 23 vorgesehen, so wie sie bei Kegelrollenlagern üblich sind. Der Lagerinnenring 23 weist zwei Innenlaufbahnen 24 auf. Zwischen den Außenlaufbahnen 22 des Lagerauβenringes 20 und den Innenlaufbahnen 24 des Lagerinnenringes 23 sind in Umfangsrichtung zwei Reihen von Wälzkörpern 25 in Form von Kegelrollen angeordnet. Der Lagerinnenring 24 bilden eine Aufnahmebohrung 26, die kreiszylindrisch gestaltet ist und in der ein Mitnehmerzapfen 29 eines Kopflagerhalters 38 eines Mähmesserantriebs fest aufgenommen ist. Der Mitnehmerzapfen 29 endet in einer Schulter 31. An diese Schulter 31 legt sich der Lagerinnenring 23 über einen Schutzring 28 an. Der Lagerinnenring 23 wird gegen diese Schulter 31 durch einen Befestigungsring 30 gepresst, der durch eine Schraube 33, die entlang der Längsachse 5 in den Mitnehmerzapfen 29 eingeschraubt ist, festgesetzt ist. Hierdurch werden auch die beiden Lagerreihen des als Kegelrollenlager gestalteten Wälzlagers 32 vorgespannt. Das Wälzlagers 32 kann aus metallischen Werkstoffen hergestellt sein, die für solche Lager und Belastungen, wie sie bei Mähmesserantrieben üblich sind, angemessen sind. Es versteht sich, dass grundsätzlich auch andere Wälzlager, z.B. ein zweireihiges Schrägkugellager, oder Gleitlager zum Einsatz kommen können.

Die Abdichtung erfolgt einerseits durch das topfförmige Zwischenelement 14 mit Boden 17 und andererseits in Richtung zur Schulter 31 durch eine Dichtung 34 und den Schutzring 28. Ein Schmiermittelraum 40, der durch das topfförmige Zwischenelement 14 und durch die Dichtung 34 begrenzt wird, kann über einen Schmiermittelkanal 37 im Mitnehmerzapfen 29 des Kopflagerhalters 38 mit Schmiermittel versorgt werden. An einem Schmiermittelkanaleingang 43, der von außen zugänglich ist, ist ein Schmiernippel 42 vorgesehen werden.

Zur Montage des Zwischenelements 14 wird der Schmiernippel 42 zunächst nicht eingesetzt, so dass bei der Montage Luft aus dem Schmiermittelraum 40 durch den Schmiermittelkanal 37 entweichen kann. Erst nach der Montage wird der Schmiernippel 42 eingesetzt und der Schmiermittelraum 40 mit Schmiermittel befüllt. Während des Abschmierens des Wälzlagers 32 über den Schmiernippel 42 kann Schmiermittel oder Luft durch eine Dichtlippe 41 der Dichtung 34 am Wälzlager 32 austreten.

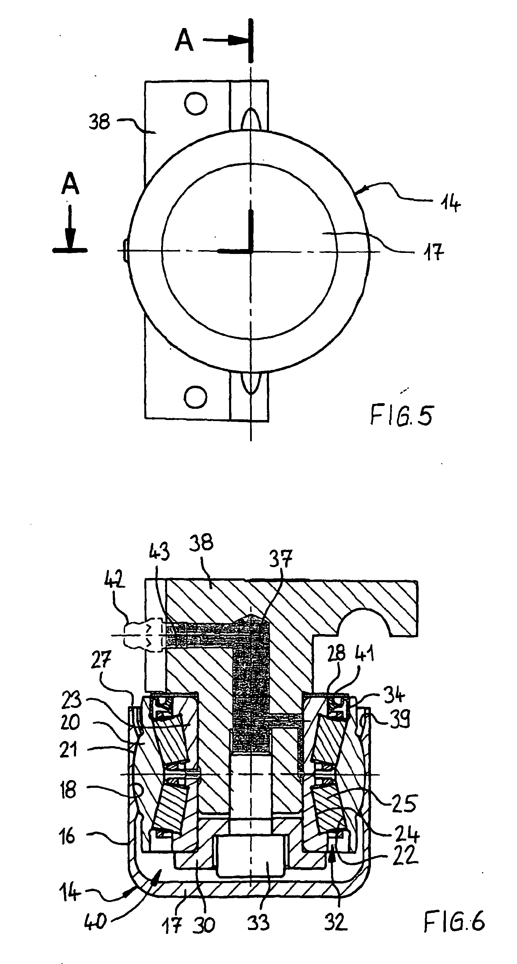

Aus Figur 6 wird insbesondere die Kante 27 des Zwischenelements 14 deutlich. An der vom Boden 17 abgewandten Seite ist an der Wand 16 eine Öffnung mit einer umlaufenden inneren Montagefläche 39 vorgesehen, die sich in Richtung zu der vom Boden 17 abgewandten Kante 27 der Wand 16 konusförmig erweitert. Die Montagefläche 39 erleichtert das Aufsetzen und Aufpressen des Zwischenelements 14 auf den Lageraußenring 20 des Wälzlagers 32 und unterstützt das radiale Aufweiten der Wand 16 bei der Montage auf den Lageraußenring.

Die richtige Position des Mitnehmerzapfens 29 in Schwenkrichtung um den durch die sphärische Innenfläche 28 und die sphärische Außenfläche 20 gebildeten Schwenkmittelpunkt, der auf der Längsachse 5 liegt, entsprechend den Einbauverhältnissen, d.h. auch in einer Neigungsposition und einer entlang der Achse der Durchgangsbohrung 6 eingestellte Position des Zwischenelements 14 kann dadurch fixiert werden, dass die Spannmittel in Form der Spannschraube 11 festgezogen werden. Dadurch verringert sich der Querschnitt der Durchgangsbohrung 6 so, dass eine radiale Kraft auf das Zwischenelement 14 ausgeübt wird. Da das Zwischenelement 14 selbst radial elastisch ist, kann ebenfalls der Durchmesser dieses Zwischenelements 14 verringert werden und dieser presst sich mit seiner sphärischen Innenfläche 18 gegen die sphärische Außenfläche 21 des Lageraußenringes 20 an. Damit wird dieser festgesetzt. Der Lageraußenring 20 ist von seinen Abmessungen her so gewählt, dass er selbst keiner Verformung unterliegt und damit auch durch das Anpressen kein Einfluss auf das Lagerspiel und die Laufverhältnisse des Wälzlagers ausgeübt werden.

Durch die Ausbildung des Zwischenelements 14 aus einem Metall und insbesondere aus einem Stahl, der so federt, dass er seine ursprüngliche Form wieder einnimmt, in der der Schlitz im entspannten Zustand seine größte Weite aufweist, wird die Klemmwirkung nach dem Lösen der Spannschraube wirksam aufgehoben und es ist eine erneute leichtgängige Einstellung möglich.

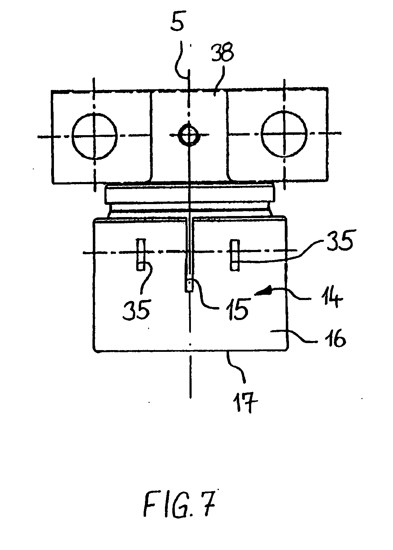

In Figur 7 ist eine alternative Ausführungsform eines Zwischenelements 14 dargestellt, welches zur Erhöhung der radialen Elastizität des Zwischenelements 14 Schlitze 15, 35 aufweist. Die Wand 16 weist ausgehend von einer dem Boden 17 abgewandten Kante 27 mindestens einen, bevorzugt mindestens drei erste Schlitze 15 auf. Diese ersten Schlitze 15 sind parallel zur Längsachse 5 über den Umfang der Wand 16 verteilt angeordnet, können aber auch unter einem Winkel zur Längsachse 5 verlaufen.

Um die Elastizität des Wand 16 noch weiter zu erhöhen, sind über dem Umfang zweite Schlitze 35 vorgesehen, die axial derart zu den ersten Schlitzen 15 versetzt angeordnet sind, dass diese nicht von der Kante 27 ausgehen. Um eine Leckage von Schmiermittel zu vermeiden, enden, von der Kante 27 aus gesehen, sowohl die ersten Schlitze 15 als auch die zweiten Schlitze 35 innerhalb der Durchgangsbohrung 6. Alternativ können die Schlitze 15, 35 auch mit einem Gummimaterial verfüllt sein, das an das Zwischenelemente 14 anvulkanisiert wird, so dass die Schlitze 15, 35 die nötige Elastizität bieten und gleichzeitig nach außen abgedichtet sind.

### Bezugszeichenliste

- 1: Mähmesser
- 2: Messerrücken
- 3: Messerklinge
- 4: Verbindungselement
- 5: Längsachse
- 6: Durchgangsbohrung
- 7: erste Stirnfläche
- 8: zweite Stirnfläche
- 9: Spalt
- 10: Ansatz
- 11: Spannschraube
- 12: Bohrung
- 13: Gewindebohrung
- 14: Zwischenelement
- 15: erster Schlitz
- 16: Wand
- 17: Boden
- 18: sphärische Innenfläche
- 19: kreiszylindrische Außenfläche
- 20: Lagerau βenring
- 21: sphärische Außenfläche
- 22: Außenlaufbahn
- 23: Lagerinnenring
- 24: Innenlaufbahn
- 25: Wälzkörper
- 26: Aufnahmebohrung
- 27: Kante
- 28: Schutzring
- 29: Mitnehmerzapfen
- 30: Befestigungsring
- 31: Schulter
- 32: Wälzlager
- 33: Schraube
- 34: Dichtung
- 35: zweiter Schlitz
- 36: Achse
- 37: Schmiermittelkanal
- 38: Kopflagerhalter
- 39: Montagefläche
- 40: Schmiermittelraum
- 41: Dichtlippe
- 42: Schmiernippel
- 43: Schmiermittelkanaleingang

## Patentansprüche

1. Verbindungsanordnung zum Verbinden eines Mähmesserantriebs mit einem Mähmesser (1) umfassend
ein Verbindungselement (4), das mit dem Mähmesser (1) ein Bauteil bildet oder zur Verbindung mit demselben dient und das einen offenen Ring mit einer entlang einer Längsachse (5) verlaufenden Durchgangsbohrung (6) aufweist,
ein Zwischenelement (14), das in der Durchgangsbohrung (6) des Verbindungselements (4) sitzt und eine sphärische Innenfläche (18) aufweist, und ein Rotationslager (32), das mit einer der sphärischen Innenfläche (18) angepassten sphärischen Außenfläche (21) in dem Zwischenelement (14) aufgenommen ist, wobei die sphärische Innenfläche (18) und die sphärische Auβenfläche derart gestaltet sind, dass das Rotationslager (32) in dem Zwischenelement (14) gehalten ist,
**dadurch gekennzeichnet,**
**dass** das Zwischenelement (14) topfförmig mit einer um die Längsachse (5) verlaufenden Wand (16) und einen Boden (17) gestaltet ist und
**dass** die Wand (16) derart gestaltet ist, dass das Zwischenelement (14) durch elastisches Aufweiten der Wand auf das Rotationslager (32) montierbar ist.

2. Verbindungsanordnung nach Anspruch 1,
**dadurch gekennzeichnet,**
**dass** das topfförmige Zwischenelement (14) aus metallischem Werkstoff hergestellt ist.

3. Verbindungsanordnung nach einem der vorangehenden Ansprüche,
**dadurch gekennzeichnet,**
**dass** das topfförmige Zwischenelement (14) aus einem Kunststoff, insbesondere aus einem mit Metallpartikeln versetzten Kunststoff, hergestellt ist.

4. Verbindungsanordnung nach einem der vorangehenden Ansprüche,
**dadurch gekennzeichnet,**
**dass** an der vom Boden (17) abgewandten Seite der Wand (16) eine Öffnung mit einer umlaufenden inneren Montagefläche (39) vorgesehen ist, die sich in Richtung zu einer vom Boden (17) abgewandten Kante der Wand (16) konusförmig erweitert.

5. Verbindungsanordnung nach einem der vorangehenden Ansprüche,
**dadurch gekennzeichnet,**
**dass** zumindest ein erster Schlitz (15) in der Wand (16) vorgesehen ist, wobei der erste Schlitz (15) von einer dem Boden (17) abgewandten Kante der Wand (16) ausgeht.

6. Verbindungsanordnung nach Anspruch 5,
**dadurch gekennzeichnet,**
**dass** zumindest ein zweiter Schlitz (35) in der Wand (16) vorgesehen ist, der axial versetzt zum zumindest einen ersten Schlitz (15) angeordnet ist.

7. Verbindungsanordnung nach Anspruch 6,
**dadurch gekennzeichnet,**
**dass** der zumindest eine zweite Schlitz (35) von der Durchgangsbohrung (6) abgedeckt ist.

8. Verbindungsanordnung nach einem der vorangehenden Ansprüche,
**dadurch gekennzeichnet,**
**dass** die Schlitze (15, 35) mit einem Gummimaterial verfüllt sind.

9. Verbindungsanordnung nach einem der vorangehenden Ansprüche,
**dadurch gekennzeichnet,**
**dass** das Rotationslager (32) eine Aufnahmebohrung (26) zur Aufnahme eines Mitnehmerzapfens (29) des Mähmesserantriebs aufweist.

10. Verbindungsanordnung nach einem der vorangehenden Ansprüche,
**dadurch gekennzeichnet,**
**dass** das Rotationslager als Wälzlager (32) mit einem Lageraußenring (20), der die sphärische Außenfläche (21) aufweist, einem Lagerinnenring (23), der die Aufnahmebohrung (26) aufweist, und zwischen dem Lageraußenring (20) und dem Lagerinnenring (23) angeordneten Wälzkörpern (25) gestaltet ist.

11. Verbindungsanordnung nach einem der vorangehenden Ansprüche,
**dadurch gekennzeichnet,**
**dass** Spannmittel (11) zur Veränderung des Querschnitts der Durchgangsbohrung (6) des Verbindungselements (4) vorgesehen sind.

## Claims

1. Connection arrangement for connecting a mowing sickle drive to a mowing sickle (1), comprising
a connection element (4), which is integral with the mowing sickle (1) or can be connected to the mowing sickle (1) and which has an open ring with a through bore (6) extending along a longitudinal axis (5),
an intermediate element (14), which rests in the through bore (6) of the connection element (4) and has a spherical inner face (18), and
a rotational bearing (32), which is accommodated with a spherical outer face (21), adapted to the spherical inner face (18), in the intermediate element (14), wherein the spherical inner face (18) and the spherical outer face are formed such, that the rotational bearing (32) is held in the intermediate element (14),
**characterised in**
**that** the intermediate element (14) is formed pot-like with a wall extending around a longitudinal axis (5) and with a bottom (17), and
**that** the wall (16) is formed such, that the intermediate element (14) is mountable on the rotational bearing (32) by means of elastically expanding the wall.

2. Connection arrangement according to claim 1,
**characterised in**
**that** the pot-like intermediate element (14) is manufactured from a metallic material.

3. Connection arrangement according to one of the preceding claims,
**characterised in**
**that** the pot-like intermediate element (14) is manufactured from a plastic, especially from a plastic with metal particles.

4. Connection arrangement according to one of the preceding claims,
**characterised in**
**that** at the side of the wall (16), facing away from the bottom (17), an opening with a circumferential inner assembly face (39) is provided, which flares conically in direction to an edge of the wall (16) facing away from the bottom (17).

5. Connection arrangement according to one of the preceding claims,
**characterised in**
**that** at least one first slot (15) is provided in the wall (16), wherein the first slot (15) starts at an edge of the wall (16) facing away from the bottom (17).

6. Connection arrangement according to claim 5,
**characterised in**
**that** at least one second slot (35) is provided in the wall (16), which is arranged axially off-set to the at least one first slot (15).

7. Connection arrangement according to claim 6,
**characterised in**
**that** the at least one second slot (35) is covered by the through bore (6).

8. Connection arrangement according to one of the preceding claims,
**characterised in**
**that** the slots (15, 35) are filled with a rubber material.

9. Connection arrangement according to one of the preceding claims,
**characterised in**
**that** the rotational bearing (32) has an accommodation bore (26) for accommodating a driving trunnion (29) of the mowing sickle drive.

10. Connection arrangement according to one of the preceding claims,
**characterised in**
**that** the rotational bearing is formed as rolling member bearing (32), which has an outer bearing race (20), which has a spherical outer face (21), an inner bearing race (23), which has the accommodation bore (26), and rolling members (25), which are arranged between the outer bearing race (20) and the inner bearing race (23).

11. Connection arrangement according to one of the preceding claims,
**characterised in**
**that** clamping means (11) are provided for changing the cross-section of the through bore (6) of the connection element (4).

## Revendications

1. Dispositif de liaison pour relier une lame de faucheuse à une lame de faucheuse (1) comprenant un élément de liaison (4), qui forme un composant avec la lame de faucheuse (1) ou sert à la liaison avec celle-ci et qui présente une bague ouverte avec un alésage de passage (6) agencé le long d'un axe longitudinal (5),
un élément intermédiaire (14), qui est logé dans l'alésage de passage (6) de l'élément de liaison (4) et présente une surface interne (18) sphérique, et un palier de rotation (32), qui est réceptionné avec une surface externe (21) sphérique adaptée à la surface interne (18) sphérique dans l'élément intermédiaire (14), la surface interne (18) sphérique et la surface externe sphérique étant conçues de telle sorte que le palier de rotation (32) est maintenu dans l'élément intermédiaire (14),
**caractérisé en ce que** l'élément intermédiaire (14) est conçu en forme de pot avec une paroi (16) agencée autour de l'axe longitudinal (5) et d'un fond (17) et **en ce que** la paroi (16) est conçue de telle sorte que l'élément intermédiaire (14) peut être monté par élargissement élastique de la paroi sur le palier de rotation (32).

2. Dispositif de liaison selon la revendication 1,
**caractérisé en ce que**
l'élément intermédiaire (14) en forme de pot est fabriqué à base de matériau métallique.

3. Dispositif de liaison selon l'une quelconque des revendications précédentes,
**caractérisé en ce que**
l'élément intermédiaire (14) en forme de pot est fabriqué à base d'un plastique, en particulier d'un plastique mélangé avec des particules de métal

4. Dispositif de liaison selon l'une quelconque des revendications précédentes,
**caractérisé en ce que** sur le coté, opposé au fond (17), de la paroi (16) est prévue une ouverture avec une surface de montage (39) interne périphérique, laquelle s'élargit en forme de cône en direction d'une arête, opposée au fond (17), de la paroi (16).

5. Dispositif de liaison selon l'une des revendications précédentes,
**caractérisé**
**en ce qu'**au moins une première fente (15) est prévue dans la paroi (16), la première fente (15) partant d'une arête, opposée au fond (17), de la paroi (16).

6. Dispositif de liaison selon la revendication 5,
**caractérisé en ce qu'**au moins une seconde fente (35) est prévue dans la paroi (16), laquelle fente est disposée de façon décalée axialement par rapport à au moins première fente (15).

7. Dispositif de liaison selon la revendication 6,
**caractérisé en ce que** la au moins une seconde fente (35) est recouverte par l'alésage de passage (6).

8. Dispositif de liaison selon l'une des revendications précédentes,
**caractérisé**
**en ce que** les fentes (15, 35) sont remplies avec un matériau en caoutchouc.

9. Dispositif de liaison selon l'une des revendications précédentes,
**caractérisé en ce que** le palier de rotation (32) présente un alésage de logement (26) pour le logement d'un tenon entraîneur (29) de l'entraînement de lame de faucheuse.

10. Dispositif de liaison selon l'une des revendications précédentes,
**caractérisé en ce que** le palier de rotation est conçu comme palier à roulement (32) avec une bague externe de palier (20), qui présente la surface externe (21) sphérique, une bague interne de palier (23), qui présente l'alésage de logement (26), et des corps de roulement (25) disposés entre la bague externe de palier (20) et la bague interne de palier (23).

11. Dispositif de liaison selon l'une des revendications précédentes,
**caractérisé en ce que**
des moyens de serrage (11) sont prévus pour faire varier la section de l'alésage de passage (6) de l'élément de liaison (4).
